# EUROPÄISCHE PATENTSCHRIFT

(11) **EP 0 524 320 B1**
(45) Veröffentlichungstag und Bekanntmachung des Hinweises auf die Patenterteilung: **30.11.1994**
(21) Anmeldenummer: 91109960.4
(22) Anmeldetag: 18.06.1991
(51) Int. Cl.: E04C 2/52, F24D 3/16

(54) **Wandelement**
Wall panel
Elément de paroi

(43) Veröffentlichungstag der Anmeldung: 27.01.1993
(73) Patentinhaber: Jansen, Hatto, D-47445 Moers (DE)
(72) Erfinder: Jansen, Hatto, D-47445 Moers (DE)
(74) Vertreter: Funken, Josef, Dipl.-Ing.

(56) Entgegenhaltungen:
- DE-A- 3 908 108
- FR-A- 2 438 129
- US-A- 1 744 517

## Beschreibung

Die Erfindung betrifft ein Wandelement für Gebäude mit einer Wandplatte und einer Frontplatte von bestimmter Höhe und Breite, die mit Abstand voneinander und parallel zueinander vorgesehen sind und zwischen denen eine Heizeinrichtung und eine sich über die Fläche der Wandplatte und der Frontplatte erstreckende Wärmedämmstoffschicht vorgesehen ist.

Bei Neubauten werden die Wände im Innern des Gebäudes oftmals mit vorgefertigten Wandelementen versehen, um ein Verputzen der Wände zu vermeiden. Desgleichen ist man seit einiger Zeit dazu übergegangen, sanierungsbedürftige Wände ebenfalls mit vorgefertigten Wandelementen zu verkleiden, weil derartige Sanierungsarbeiten sauberer und schneller durchführbar sind als das Verputzen der Wände.

Aus der FR-A-2 438 129 ist ein Wandelement bekannt, das einen Rahmen aufweist, an dem an der Außenseite eine Außenplatte und an der Innenseite eine Innenplatte vorgesehen ist. An der Außenplatte ist innenseitig eine Platte mit senkrecht angeordneten Rillen in Form beispielsweise eines profilierten Bleches vorgesehen. Desgleichen ist an der Innenplatte innenseitig eine Platte mit senkrecht verlaufenden Rillen in Form eines profilierten Bleches angeordnet. Zwischen den beiden gerillten Platten ist eine Isolationsschicht aus Wärmedämmstoff vorgesehen. In den von der Isolation nicht ausgefüllten Rillen der beiden gerillten Platten sind Wasserleitungen mit in diesen strömendem Wasser angeordnet. Dieses Wandelement dient der Wärmegewinnung, wenn das in den Rohren befindliche bzw. strömende Wasser durch Sonnenbestrahlung von außen erwärmt wird.

In der DE-A-39 08 108 ist eine Großflächen-Strahlungsheizung für Decken und Wände beschrieben, wobei ein von Luft umspültes Heizrohr lose in Bügeln an Decke oder Mauer auf angeschraubten Distanzträgern verlegt ist, an denen eine Wand fest oder lösbar befestigt ist. Hierbei erfolgt die Temperaturregelung über ein Heizkörper-Thermostatventil.

Aus der US-A-1 744 517 ist eine Heizanordnung für Gebäude bekannt, die aus einer Vielzahl von Radiatorplatten besteht, die mit ihren benachbarten Enden gegeneinander gestellt sind. Diese Radiatoren werden durch Heizungsrohre, die an den Vorlauf und den Rücklauf eines Heizungssystems angeschlossen sind, erwärmt.

Für die DE-A-39 08 108 und die US-A-1 744 517 gilt, daß, wenn sich in der Heizungsanlage Luft befindet, diese durch den gesamten Heizungskreislauf geführt werden muß, um den Heizungskreislauf zu entlüften, was mitunter mit erheblichen Schwierigkeiten verbunden ist.

Der Erfindung liegt die Aufgabe zugrunde, ein Wandelement der einleitend genannten Art zu schaffen, das gleichzeitig sowohl ein Heizelement als auch ein Wärmedämmelement darstellt, wobei die Möglichkeit besteht, jedes einzelne Wandelement unabhängig von benachbarten Wandelementen ohne Vorhandensein eines Entlüftungsventils zu entlüften.

Diese Aufgabe wird erfindungsgemäß dadurch gelöst, daß das Wandelement im Innern des Gebäudes mit Mörtel an Wänden befestigt und an der Wandplatte die Wärmedämpfstoffschicht sowie an der Wärmedämpfstoffschicht eine Heizrohrschlange angeordnet ist, daß der Eingang der Heizrohrschlange an dem Vorlaufrohr und deren Ausgang an dem Rücklaufrohr eines Heizungssystems anschließbar und im Eingang der Heizrohrschlange ein regulierbares Vorlaufventil und in deren Ausgang eine absperrbare und regulierbare Rücklaufverschraubung vorgesehen ist und daß im Eingang und im Ausgang der Heizrohrschlange in Vorlaufrichtung gesehen unmittelbar hinter dem Vorlaufventil und unmittelbar vor der Rücklaufverschraubung je eine Entlüftungsleitung vorgesehen ist.

Auf diese Weise gelangt man zu einem Wandelement, das gleichermaßen in Neubauten anstelle des Verputzens von Wänden als auch zum Verkleiden von sanierungsbedürftigen Wänden in Altbauten geeignet ist. Hinzu kommt, daß das erfindungsgemäße Wandelement ein Wärmedämmelement darstellt, so daß die während der Heizperiode im Herbst, Winter und Frühjahr im Raum vorhandene Wärme nur sehr langsam nach außen dringt und im Sommer die außen herrschende hohe Temperatur nur sehr langsam in den Raum eindringt. Außerdem stellt dieses Wandelement eine Heizung, nämlich eine Wandheizung dar, so daß man auf andere Heizungen, etwa auf die üblichen Heizkörper einer Zentralheizung oder auf verschiedene Öfen bei einer Ofenheizung verzichten kann. Durch das Vorhandensein der Rücklaufverschraubung kann die gewünschte Temperatur des Wandelementes eingestellt werden. Gleichzeitig besteht die Möglichkeit, durch die regulierbare Rücklaufverschraubung die Menge des durch die Heizrohrschlange fließenden Heizungswassers zu begrenzen. Mittels der beiden Entlüftungsleitungen ist die Möglichkeit gegeben, die in dem Wandelement befindliche Heizrohrschlange unabhängig von den Heizrohrschlangen der benachbarten Wandelemente zu durchspülen und somit die in der Heizrohrschlange befindliche Luft aus dieser zu entfernen.

In weiterer Ausgestaltung der Erfindung können der Eingang der Heizrohrschlange und der Ausgang der Heizrohrschlange um eine bestimmte Länge aus dem Wandelement zum Rauminneren herausgeführt sein. Dadurch ist es ohne weiteres möglich, die einzelnen nebeneinander angeordneten Wandelemente mit dem Vorlauf und dem Rücklauf eines Heizungssystems zu verbinden, indem der Eingang der Heizrohrschlange mit dem Vorlaufrohr und der Ausgang der Heizrohrschlange mit dem Rücklaufrohr verbunden, beispielsweise verschraubt oder verschweißt werden.

Zweckmäßig ist das regulierbare Vorlaufventil ein Thermostatventil.

Die Entlüftungsleitungen bestehen zweckmäßig aus flexiblen Stahlpanzerrohren mit Verschlußkappen. Hierdurch ist das Entlüften der Heizrohrschlange ohne weiteres möglich.

Zweckmäßig ist bzw. sind die Wandplatte und/oder die Frontplatte als Gipskartonplatte(n) ausgebildet.

Weiterhin empfiehlt es sich, daß die Wärmedämmstoffschicht eine Stärke von etwa 20 bis etwa 100 mm, insbesondere von etwa 40 bis etwa 60 mm aufweist.

Die Erfindung wird nachfolgend anhand eines in der Zeichnung dargestellten Ausführungsbeispiels des näheren erläutert. Es zeigt
- Fig. 1: einen Querschnitt durch ein an einer Gebäudewand angeordnetes Wandelement,
- Fig. 2: den unteren Bereich der Fig. 1 in vergrößerter Darstellung und
- Fig. 3: eine Draufsicht auf Figur 1 in Richtung des Pfeiles III.

Ein in der Zeichnung dargestelltes Wandelement 1 ist mit Mörtel 2,3,4 unter Bildung eines Zwischenraumes 5 vor einer Gebäudeinnenwand 6 angeordnet. Das Wandelement 1 steht auf dem Boden 7 auf und reicht bis zur Decke 8.

Das Wandelement 1 hat eine der Gebäudeinnenwand 6 zugeordnete Wandplatte 9 und eine mit dem Abstand a von der Wandplatte 9 angeordnete Frontplatte 10. Beide Platten 9,10 bestehen zweckmäßig aus Gipskarton. Es sind jedoch auch andere geeignete Platten anwendbar. In dem Zwischenraum 11 zwischen der Wandplatte 9 und der Frontplatte 10 ist eine Wärmedämmstoffschicht 12 vorgesehen, die an der Wandplatte 9 befestigt ist und sich im übrigen über die gesamte Fläche der Wandplatte 9 und der Frontplatte 10 erstreckt.

Zwischen der Wärmedämmstoffschicht 12 und der Frontplatte 10 ist eine aus einem mehrfach gebogenen Heizrohr bestehende Heizrohrschlange 13 angeordnet.

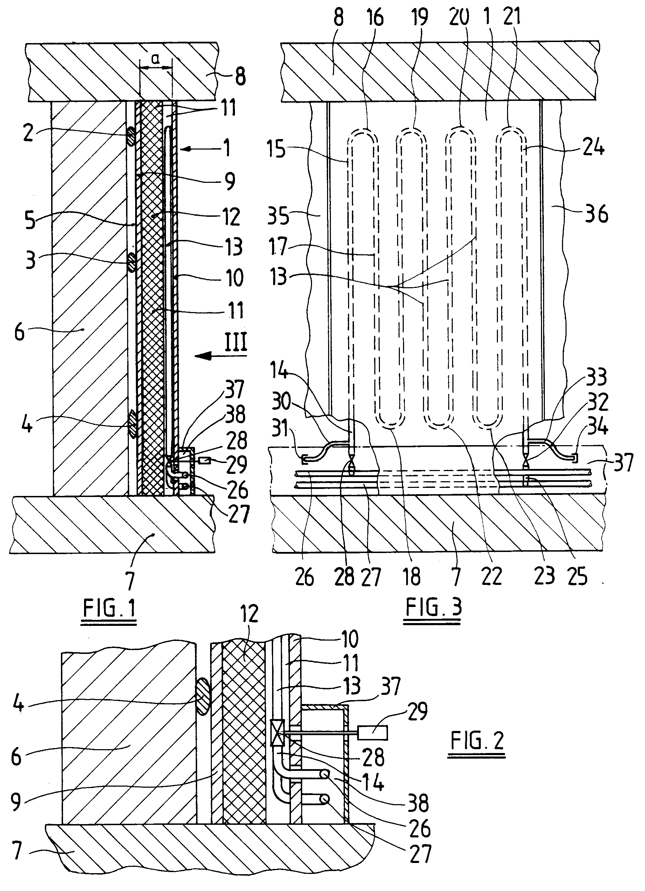

In Figur 3 sind die untere linke Ecke und die untere rechte Ecke des Wandelementes 1 weggebrochen, damit die Anordnungen in diesen beiden Bereichen in der Zeichnung deutlich erkennbar sind. Der Eingang 14 der Heizrohrschlange 13 befindet sich, wie insbesondere aus Figur 3 ersichtlich ist, an der linken Seite des Wandelementes 1 in dessen unterem Bereich. Von hieraus verläuft die Heizrohrschlange 13 zunächst als gerades Heizrohr 15 senkrecht nach oben bis kurz unterhalb des oberen Endes des Wandelementes 1. Hier ist in dem Heizrohr 15 eine Krümmung 16, hinter der ein Heizrohr 17 senkrecht nach unten verläuft.

Kurz oberhalb des unteren Endes des Wandelementes 1 hat das Heizrohr 17 eine weitere Krümmung 18, hinter der das Heizrohr wieder senkrecht nach oben verläuft. Nach mehreren weiteren oberen Krümmungen 19,20,21 sowie nach mehreren weiteren unteren Krümmungen 22,23 verläuft das Heizrohr 24 senkrecht nach unten und endet mit dem Ausgang 25 unten rechts im Wandelement 1.

Vor dem Wandelement 1 sind unten kurz oberhalb des Bodens 7 ein Vorlaufrohr 26 und ein Rücklaufrohr 27 eines Heizungssystems vorgesehen. Mit dem Vorlaufrohr 26 ist der Eingang 14 der Heizrohrschlange 13 verbunden. Im Bereich des Einganges 14 ist ein Thermostatventil 28 vorgesehen, das über einen Thermostatkopf 29 einzustellen ist.

Weiter in Vorlaufrichtung ist im Bereich des Einganges 14 eine Entlüftungsleitung 30 mit einer Verschlußkappe 31 vorgesehen. Die Entlüftungsleitung 30 besteht aus einem flexiblen Stahlpanzerrohr.

Im Bereich des Ausganges 25 ist eine absperr- und regulierbare Rücklaufverschraubung 32 angeordnet, mit der die Menge des durch die Heizrohrschlange 13 durchlaufenden Heizwassers eingestellt werden kann. Ebenfalls im Bereich des Ausganges 25 ist eine Entlüftungsleitung 33 mit einer Verschlußkappe 34 vorgesehen. Auch diese Entlüftungsleitung 33 besteht aus einem flexiblen Stahlpanzerrohr.

Wie insbesondere in Figur 3 angedeutet ist, schließen sich an dem Wandelement 1 zu beiden Seiten weitere gleiche Wandelemente 35 und 36 an.

Im unteren Bereich des Wandelementes 1 ist eine kastenförmige Fußleiste 37 vorgesehen, in der das Vorlaufrohr 26 und das Rücklaufrohr 27 angeordnet sind. Die Entlüftungsleitungen 30 und 33 ragen ebenfalls in den von der Fußleiste 37 gebildeten Raum 38 hinein.

Mit Hilfe des Vorlaufventils 28 und der Rücklaufverschraubung 32 lassen sich die Temperatur des Wandelementes 1 und die Durchlaufmenge des Heizungswassers durch die Heizrohrschlange 13 einstellen. Darüberhinaus ist es möglich, durch Schließen des Vorlaufventils 28 und der Rücklaufverschraubung 32 das Wandelement 1 aus dem Heizungssystem abzuschalten.

Wenn sich in der Heizrohrschlange 13 Luft befindet, braucht diese nicht durch den gesamten Heizungskreislauf geführt zu werden, sondern es besteht die Möglichkeit, das Vorlaufventil 28 und die Rücklaufverschraubung 32 zu schließen und Wasser durch die Entlüftungsleitung 30 in die Heizrohrschlange 13 und aus dieser heraus durch die Entlüftungsleitung 33 nach außen zu führen. Sobald auf diese Weise die in der Heizrohrschlange 13 befindliche Luft aus dieser entfernt ist, wird der Spülvorgang beendet. Anschließend werden das Vorlaufventil 28 und die Rücklaufverschraubung 32 wieder geöffnet, so daß die Heizrohrschlange 13 des Wandelementes 1 sich wieder im Heizungskreislauf befindet.

## Patentansprüche

1. Wandelement für Gebäude mit einer Wandplatte und einer Frontplatte von bestimmter Höhe und Breite, die mit Abstand voneinander und parallel zueinander vorgesehen sind und zwischen denen eine Heizeinrichtung und eine sich über die Fläche der Wandplatte und der Frontplatte erstreckende Wärmedämmstoffschicht vorgesehen ist,
**dadurch gekennzeichnet**,
daß das Wandelement (1) im Innern des Gebäudes mit Mörtel (2,3,4) an Wänden (6) befestigbar und an der Wandplatte (9) die Wärmedämmstoffschicht (12) sowie an der Wärmedämmstoffschicht (12) eine Heizrohrschlange (13) angeordnet ist, daß der Eingang (14) der Heizrohrschlange (13) an dem Vorlaufrohr (26) und deren Ausgang (25) an dem Rücklaufrohr (27) eines Heizungssystems anschließbar und im Eingang (14) der Heizrohrschlange (13) ein regulierbares Vorlaufventil (28) und in deren Ausgang (25) eine absperrbare und regulierbare Rücklaufverschraubung (32) vorgesehen ist und daß im Eingang (14) und im Ausgang (25) der Heizrohrschlange (13) in Vorlaufrichtung gesehen unmittelbar hinter dem Vorlaufventil (28) und unmittelbar vor der Rücklaufverschraubung (32) je eine Entlüftungsleitung (30,33) vorgesehen ist.

2. Wandelement nach Anspruch 1, dadurch gekennzeichnet, daß der Eingang (14) der Heizrohrschlange (13) und der Ausgang (25) der Heizrohrschlange (13) um eine bestimmte Länge aus dem Wandelement (1) zum Rauminneren herausgeführt sind.

3. Wandelement nach Anspruch 1 oder 2, dadurch gekennzeichnet, daß das regulierbare Vorlaufventil (28) ein Thermostatventil ist.

4. Wandelement nach wenigstens einem der vorhergehenden Ansprüche, dadurch gekennzeichnet, daß die Entlüftungsleitungen (30,33) aus flexiblen Stahlpanzerrohren mit Verschlußkappen (31,34) bestehen.

5. Wandelement nach wenigstens einem der vorhergehenden Ansprüche, dadurch gekennzeichnet, daß die Wandplatte (9) und/oder die Frontplatte (10) als Gipskartonplatte(n) ausgebildet sind.

6. Wandelement nach wenigstens einem der vorhergehenden Ansprüche, dadurch gekennzeichnet, daß die Wärmedämmstoffschicht (12) eine Stärke von etwa 20 bis etwa 100 mm, insbesondere von etwa 40 bis etwa 60 mm aufweist.

## Claims

1. Wall element for buildings, having a wall panel and a front panel of a predetermined height and width which are provided at a spacing from one another and parallel to one another and between which a heating means and a heat insulating material layer extending over the surface of the wall panel and front panel are provided, characterized in that the wall element (1) can be secured to walls (6) in the interior of the building by means of mortars (2, 3, 4) and the heat insulating material layer (12) is arranged on the wall plate (9) and a heating coil (13) is arranged on the heat insulating material layer (12), in that the entrance (14) of the heating coil (13) can be connected to the forward flow conduit (26) and the exit (25) thereof can be connected to the return flow conduit (27) of a heating system and a regulable forward flow valve (28) is provided at the entrance (14) of the heating coil (13) and a blockable and regulable return flow screw connection (32) is provided at the exit (25) thereof, and in that, as seen in the direction of forward flow, a respective de-aerating line (30, 33) is provided at the entrance (14) and at the exit (25) of the heating coil (13) directly behind the forward flow valve (28) and directly in front of the return flow screw connection (32).

2. Wall element according to Claim 1, characterized in that the entrance (14) of the heating coil (13) and the exit (25) of the heating coil (13) are guided out of the wall element (1) by a certain length towards the interior of the room.

3. Wall element according to Claim 1 or 2, characterized in that the regulable forward flow valve (28) is a thermostatic valve.

4. Wall element according to at least one of the preceding claims, characterized in that the de-aerating lines (30, 33) comprise flexible steel armoured conduits having closure caps (31, 34).

5. Wall element according to at least one of the preceding claims, characterized in that the wall panel (9) and/or the front panel (10) are constructed as plasterboard panel(s).

6. Wall element according to at least one of the preceding claims, characterized in that the heat insulating material layer (12) has a thickness of approximately 20 to approximately 100 mm, in particular of approximately 40 to approximately 60 mm.

## Revendications

1. Elément de paroi pour bâtiments, comprenant un panneau mural et un panneau frontal d'une hauteur et d'une largeur déterminées qui sont disposés à distance et parallèlement l'un par rapport l'autre et entre lesquels sont prévus un dispositif de chauffage et une couche de matériau calorifuge qui s'étend sur la surface du panneau mural et du panneau frontal, caractérisé en ce que l'élément de paroi (1) peut être fixé sur des murs (6) à l'intérieur du bâtiment au moyen de mortier (2, 3, 4), que sur le panneau mural (9) est disposée la couche de matériau calorifuge (12) alors qu'un serpentin de chauffage (13) est monté sur la couche de matériau calorifuge (12), que l'entrée (14) du serpentin de chauffage (13) peut être raccordée au tuyau montant (26), tandis que sa sortie (25) peut être raccordée au tuyau de retour (27) d'un système de chauffage, que dans l'entrée (14) du serpentin de chauffage (13) est prévue une soupape d'alimentation (28) réglable, alors que sa sortie (25) comporte un raccord à vis de retour (32), et que dans l'entrée (14) et dans la sortie (25) du serpentin de chauffage (13) des conduites de purge (30, 33) sont prévue, qui vues dans la direction aller, sont dispersées immédiatement en aval de la soupape d'alimentation (28) et respectivement immédiatement en amont du raccord à vis de retour (32).

2. Elément de paroi selon la revendication 1, caractérisé en ce que l'entrée (14) du serpentin de chauffage (13) et la sortie (25) du serpentin de chauffage (13) sortent sur une certaine longueur dudit élément de paroi (1) en direction de l'intérieur du local.

3. Elément de paroi selon l'une des revendications 1 ou 2, caractérisé en ce que la soupape d'alimentation (28) réglable est une soupape thermostatique.

4. Elément de paroi selon l'une quelconque des revendications précédentes, caractérisé en ce que les conduites de purge (30, 33) sont constituées de tubes blindés flexibles avec des capuchons de fermeture (31, 34).

5. Elément de paroi selon l'une quelconque des revendications précédentes, caractérisé en ce que le panneau mural (9) et/ou le panneau frontal (10) sont conformés en panneau(x) de placoplâtre.

6. Elément de paroi selon l'une quelconque des revendications précédentes, caractérisé en ce que la couche de matériau calorifuge (12) présente une épaisseur d'environ 20 à environ 100 mm, en particulier d'environ 40 à environ 60 mm.
